# EUROPEAN PATENT APPLICATION

(11) **EP 2 725 789 A1**
(43) Date of publication of application: **30.04.2014**
(21) Application number: 12802753.9
(22) Date of filing: 21.06.2012
(51) Int. Cl.: H04N 7/173, H04H 60/31, H04N 17/00

(54) **VIEWING INFORMATION COLLECTION SYSTEM, BROADCAST RECEPTION DEVICE, AND VIEWING INFORMATION COLLECTION METHOD**

(30) Priority: 22.06.2011 JP 2011138715
(71) Applicant: Mitsubishi Electric Corporation, Tokyo 100-8310 (JP)
(72) Inventor: MAEDA, Shinji, Tokyo 100-8310 (JP); MATSUBARA, Masami, Tokyo 100-8310 (JP); FUKASAWA, Tsukasa, Tokyo 100-8310 (JP); MIURA, Shin, Tokyo 100-8310 (JP)
(74) Representative: Pfenning, Meinig & Partner GbR
(86) International application number: PCT/JP2012/065852
(87) International publication number: WO 2012/176836

(57) **Abstract**

IPTV terminal 300 has viewer information acquiring unit 303 for acquiring viewer information, information about a viewer watching video/audio TV 500 outputs; channel information detecting unit 302 for detecting channel information about an IPTV broadcast distributed by IPTV broadcast distribution server 100; TV connection detecting unit 302 for detecting connection between IPTV terminal 300 and TV 500 to generate connection information; viewing information generation unit 305 for generating viewing information from channel information the channel information detecting unit 302 detects when a viewer watching video/audio output from TV 500 is present and when IPTV terminal 300 is connected to TV 500 by referring to the viewer information the viewer information acquiring unit 303 acquires and to the connection information the TV connection detecting unit 302 generates; and viewing information transmitting unit 306 for transmitting the viewing information the viewing information generation unit 305 generates to viewing information collecting server 200.

## Description

### TECHNICAL FIELD

The present invention relates to a viewing information collecting system, broadcast receiving apparatus and viewing information collecting method for collecting viewing information about a viewer in a broadcast distribution service.

### BACKGROUND ART

As a service for distributing a video content (program) such as a TV (Television) broadcast through an IP (Internet Protocol) network, an IPTV service is known. In the IPTV service, a service provider for carryingout a content distribution service lends or sells an IPTV terminal to a viewer who makes a contract with the service provider, and provides a program to the viewer via the IPTV terminal. It distributes a program from an IPTV broadcast distribution server of the service provider to the IPTV terminal as an IP packet via the IP network. It is supposed in the IPTV service that it has one or more service providers, and that each service provider has an arrangement of a plurality of channels and distributes a plurality of programs simultaneously. It is important for such a service to collect viewing information indicating what time and how long a viewer watches programs to recognize the quality estimation of a program or likes of a viewer (such as having a high ratio of watching sports programs).

Conventionally, a plurality of systems for collecting viewing information have been disclosed. For example, Patent Document 1 discloses an IP multicasting server for distributing a program; an IP multicast receiving terminal for receiving the program; and a method of connecting a viewing information receiving server for collecting the viewing information via an IP network, of generating as the viewing information the channel name of the program each IP multicast receiving terminal starts receiving, the channel name of the program it stops receiving and the time, and of transmitting the viewing information generated to the viewing information receiving server.

In addition, for the purpose of recognizing the likes of a viewer, Patent Document 2 discloses a method of installing a camera in an IPTV terminal, of identifying a viewer sitting in front of the TV set by processing an image taken with the camera by the IPTV apparatus, and of associating the program the IPTV terminal receives with the viewer.

### PRIOR ART DOCUMENT

### PATENT DOCUMENT

Patent Document 1: Japanese Patent Laid-Open No. 2010-233268
Patent Document 2: Japanese Patent Laid-Open No. 2010-98603

### DISCLOSURE OF THE INVENTION

### PROBLEMS TO BE SOLVED BY THE INVENTION

However, the foregoing Patent Document 1 and Patent Document 2 generate the viewing information in accordance with a program the IPTV multicast receiving terminal is receiving. Accordingly, they have a problem of handling the program the IPTV multicast receiving terminal is receiving as the viewing information even if the viewer leaves the TV behind without turning off the power of the IPTV multicast receiving terminal, or is viewing a recorded program stored in a recorder on the TV.

More specifically, they have a problem in that even when a viewer is not sitting in front of the TV, or when the IPTV multicast receiving terminal is not connected to the TV, or when the TV connected to the IPTV multicast receiving terminal has a plurality of input terminals and the TV selects as its input an input other than the input for the IPTV multicast receiving terminal and the TV does not provide the viewer with the program the IPTV multicast receiving terminal is receiving, they transmit information about the program the IPTV multicast receiving terminal is receiving to the viewing information receiving server as the viewing information, thereby being unable to collect accurate viewing information.

The present invention is implemented to solve the foregoing problem. Therefore it is an object of the present invention to collect the viewing information at the time only when a viewer is actually watching the program the broadcast receiving terminal is receiving.

### MEANS FOR SOLVING THE PROBLEMS

An information collecting system in accordance with the present invention has a broadcast receiving apparatus which comprises: a viewer information acquiring unit for acquiring viewer information which is information about a viewer who is watching the video and audio output from the display device; a channel information detecting unit for detecting channel information about an IPTV broadcast distributed by the broadcast distribution server; a connection detecting unit for detecting connection between the broadcast receiving apparatus and the display device, and for generating connection information; a viewing information generation unit for generating, by referring to the viewer information the viewer information acquiring unit acquires and to the connection information the connection detecting unit generates, the viewing information from the channel information the channel information detecting unit detects when the viewer who is watching the video and audio output from the display device is present and when the broadcast receiving apparatus is connected to the display device; and a viewing information transmitting unit for transmitting the viewing information the viewing information generation unit generates to the viewing information collecting server.

### ADVANTAGES OF THE INVENTION

According to the present invention, it can decide on whether the viewer is actuallyviewing the program the broadcast receiving apparatus is receiving, thereby being able to collect accurate viewing information.

### BRIEF DESCRIPTION OF THE DRAWINGS

FIG. 1 is a block diagram showing a configuration of an information collecting system of an embodiment 1;
FIG. 2 is a table showing an example of viewer information a viewer recognition device of the information collecting system of the embodiment 1 generates;
FIG. 3 is a table showing an example of channel information a channel information detecting unit of the information collecting system of the embodiment 1 detects;
FIG. 4 is a table showing an example of TV connection information a TV connection detecting unit of the information collecting system of the embodiment 1 generates;
FIG. 5 is a flowchart showing the operationof the information collecting system of the embodiment 1;
FIG. 6 is a flowchart showing the operation of the channel information detecting unit of the information collecting system of the embodiment 1;
FIG. 7 is a flowchart showing the operation of a viewing information generation unit of the information collecting system of the embodiment 1;
FIG. 8 is a table showing an example of viewing information generating conditions of the viewing information generation unit of the information collecting system of the embodiment 1;
FIG. 9 is a table showing an example of the viewing information the viewing information generation unit of the information collecting system of the embodiment 1 generates;
FIG. 10 is a flowchart showing the operation of the viewing information transmitting unit of the information collecting system of the embodiment 1;
FIG. 11 is a table showing an example of the viewing information transmitting conditions of the viewing information transmitting unit of the information collecting system of the embodiment 1;
FIG. 12 is a block diagram showing a configuration of an information collecting system of an embodiment 2;
FIG. 13 is a flowchart showing the recording operation of a broadcast recording playback unit of the information collecting system of the embodiment 2;
FIG. 14 is a flowchart showing the playback operation of the broadcast recording playback unit of the information collecting system of the embodiment 2;
FIG. 15 is a table showing an example of operation history information of the broadcast recording playback unit of the information collecting system of the embodiment 2; and
FIG. 16 is a flowchart showing the operation of the viewing information generation unit of the information collecting system of the embodiment 2.

### BEST MODE FOR CARRYING OUT THE INVENTION

The best mode for carrying out the invention will now be described with reference to the accompanying drawings to explain the present invention in more detail.

### EMBODIMENT 1

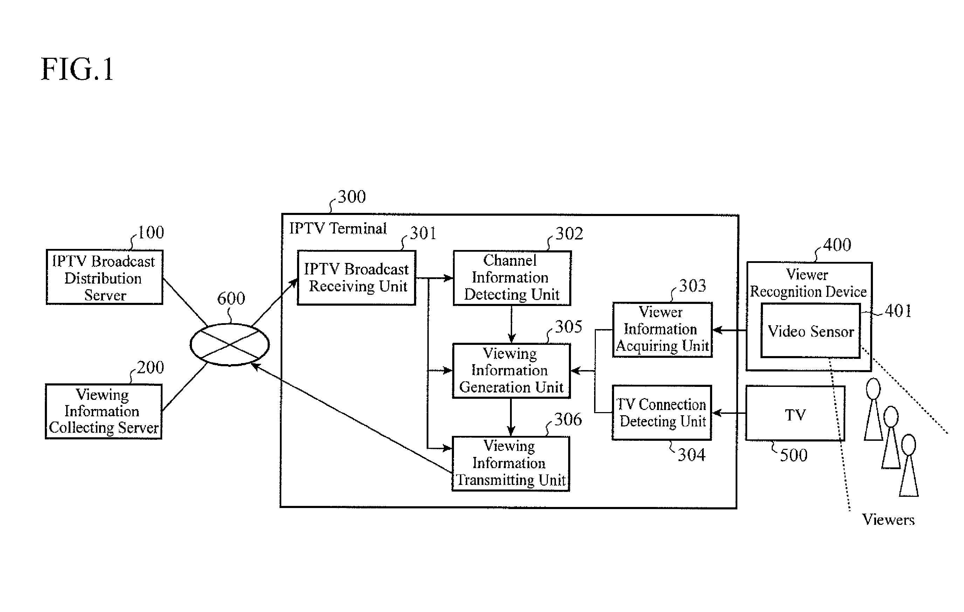

FIG. 1 is a block diagram showing a configuration of a viewing information collecting system of an embodiment 1 in accordance with the present invention.

The viewing information collecting system comprises an IPTV broadcast distribution server 100, a viewing information collecting server 200, an IPTV terminal (broadcast receiving apparatus) 300, a viewer recognition device 400, a TV set (display device) 500 and an IP network 600. The IPTV broadcast distribution server 100, viewing information collecting server 200 and IPTV terminal 300 are connected to the IP network 600, and the viewer recognition device 400 and TV 500 are connected to the IPTV terminal 300.

The IPTV broadcast distribution server 100 is a server for distributing video data and audio data to the IPTV terminal 300 via the IP network 600. The video data and audio data the IPTV broadcast distribution server 100 distributes are compressed through video coding and audio coding in the IPTV broadcast distribution server 100 and are arranged into an IP packet, followed by transmission to the IP network 600. Although the IPTV service generally uses IP multicasting, it is not essential to use the IP multicasting. For example, the TCP/IP communications protocol such as UDP unicast and the HTTP (HyperText Transfer Protocol) can also be used.

The viewing information collecting server 200 is a server for receiving the viewing information from the IPTV terminal 300 via the IP network 600. The IPTV terminal 300 is a terminal for receiving video and audio data or the like corresponding to the channel a viewer selects with a remote control or the like from the IPTV broadcast distribution server 100 via the IP network 600, and for decoding them and supplying the video and audio to the TV 500 connected.

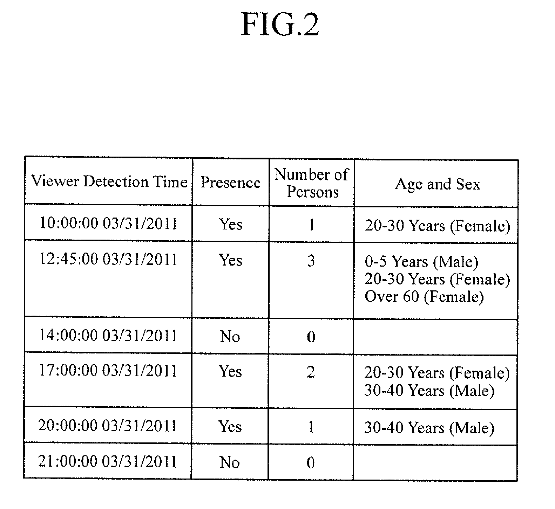

The viewer recognition device 400 has a video sensor 401. The video sensor 401 comprises a camera or motion sensor, and shoots or detects a viewer sitting near the TV 500. The viewer recognition device 400 recognizes the viewer in accordance with the image data or detection result of the video sensor 401, and generates viewer information. FIG. 2 shows an example of the viewer information the viewer recognition device 400 generates. The viewer information shown in FIG. 2 contains the detection time of a viewer, the presence or absence of a viewer in front of the TV 500, and the number of viewers, their age and sex. Incidentally, items of the viewer information of FIG. 2 are only an example and are not limited to these items.

Next, details of the IPTV terminal 300 will be described.

The IPTV terminal 300 comprises an IPTV broadcast receiving unit 301, a channel information detecting unit 302, a viewer information acquiring unit 303, a TV connection detecting unit 304, a viewing information generation unit 305 and a viewing information transmitting unit 306.

The IPTV broadcast receiving unit 301 provides basic functions of the IPTV terminal 300. More specifically, it has functions of receiving video data, audio data and the like corresponding to the channel the viewer selects with the remote control from the IPTV broadcast distribution server 100 via the IP network 600, decodes them and supplies the video and audio to the TV 500 connected. Furthermore, the IPTV broadcast receiving unit 301 has a function of executing the processing at a channel change. To be concrete, when a channel change occurs in response to a remote control operation by the viewer, the IPTV broadcast receiving unit 301 refers to a channel/address table corresponding to the channel ID after the change, acquires an address necessary for the communication using the IP network 600, and carries out control for the channel change.

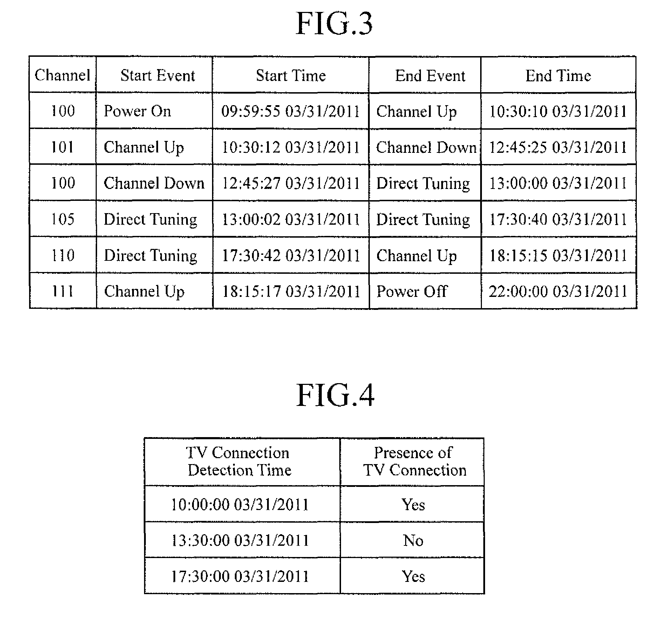

The channel information detecting unit 302 has a function of detecting the channel information about an IPTV broadcast the IPTV terminal 300 receives. FIG. 3 shows an example of the channel information the channel information detecting unit 302 detects. FIG. 3 shows channel IDs, start events and their start time, end events and their end time as the channel information the channel information detecting unit 302 detects when the channel the IPTV terminal 300 receives changes. Incidentally, items of the channel information of FIG. 3 are only an example and are not limited to these items.

The viewer information acquiring unit 303 has a function of acquiring the viewer information the viewer recognition device 400 generates.

The TV connection detecting unit 304 has a function of detecting the presence or absence of the connection between the IPTV terminal 300 and the TV 500. As a detecting method of the presence or absence of the connection between the IPTV terminal 300 and the TV 500, there is, for example, a method of connecting the IPTV terminal 300 and the TV 500 through an HDMI (High-Definition Multimedia Interface) cable, and of using a hot plug detecting function (HPD = Hot Plug Detect) which is an available function of the HDMI. To be concrete, the TV connection detecting unit 304 can detect that the TV 500 is connected to the HDMI cable by using the DDC (Display Data Channel) signal and HPD signal of the HDMI, by transmitting a signal from the IPTV terminal 300 to the DDC signal line, by causing the TV 500 that detects the signal on the DDC signal line via the HDMI cable to transmit the signal to the HPD signal line, and by detecting the signal on the HPD signal line from the TV 500.

FIG. 4 shows an example of the TV connection information the TV connection detecting unit 304 generates. The TV connection information shown in FIG. 4 indicates the time of detecting the TV connection and the presence or absence of the TV connection. Incidentally, the items of the TV connection information of FIG. 4 are only an example and are not limited to these items.

The viewing information generation unit 305 has a function of forming the viewing information from the channel information the channel information detecting unit 302 detects, the viewer information the viewer information acquiring unit 303 acquires, and the TV connection information the TV connection detecting unit 304 detects.

The viewing information transmitting unit 306 has a function of putting the viewing information formed by the viewing information generation unit 305 into an IP packet, and of transmitting it to the viewing information collecting server 200 via the IP network 600.

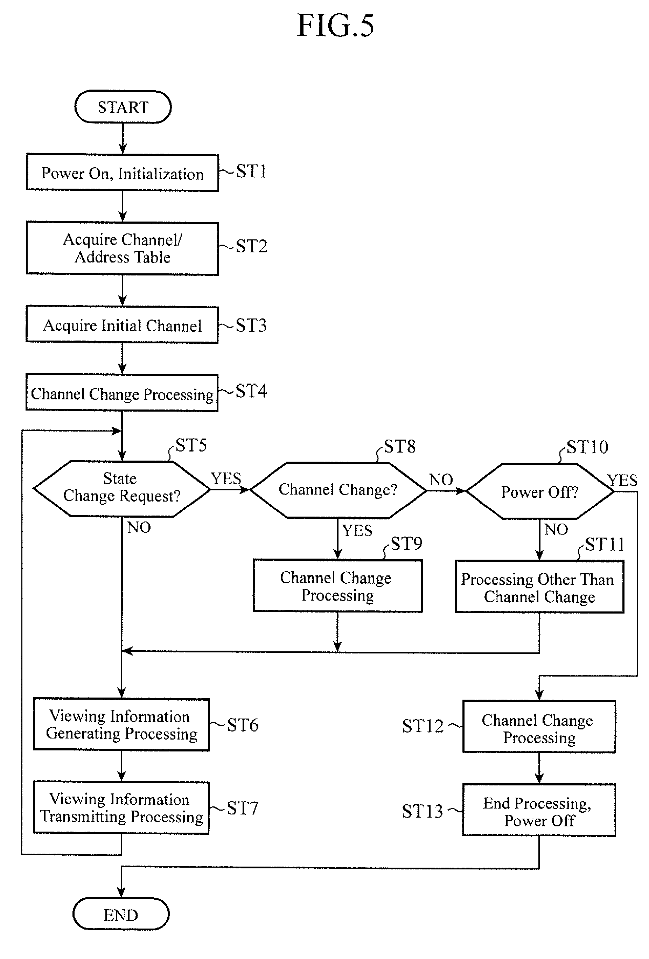

Next, the operation of the viewing information collecting system of the embodiment 1 will be described with reference to FIG. 5 to FIG. 7 and FIG. 10. First, FIG. 5 is a flowchart showing the operation of the IPTV terminal of the viewing information collecting system of the embodiment 1 in accordance with the present invention, which shows a series of operations for executing the IPTV broadcast reception, channel change, viewing information generation and viewing information transmission to the viewing information collecting server 200 during the time from power on to power off of the IPTV terminal 300.

When the IPTV terminal 300 is turned on, the IPTV broadcast receiving unit 301 carries out initialization processing and enters an operation mode (step ST1). The IPTV broadcast receiving unit 301 establishes a connection with the IPTV broadcast distribution server 200 and acquires a channel/address table (step ST2). Here, the term "channel/address table" refers to a table that makes connections between the individual channels of IPTV broadcasts the IPTV broadcast receiving unit 301 distributes and the IP addresses for the IP packet reception. The IPTV broadcast receiving unit 301 acquires the channel selected at the previous power off or the default channel of the service provider as the initial channel (step ST3). The IPTV broadcast receiving unit 301 carries out the channel change processing for receiving the initial channel it acquires at step ST3 (step ST4). According to the processing from step ST1 to step ST4, it completes starting the IPTV terminal 300, and starts receiving the initial channel.

Next, the IPTV broadcast receiving unit 301 decides on whether a state change request due to a remote control (not shown) operation of a viewer is input or not (step ST5). Unless the state change request is input (NO at step ST5), it forms and outputs a viewing information generation request so that the viewing information generation unit 305 executes viewing information generating processing (step ST6). As for the viewing information generated at step ST6, the viewing information transmitting unit 306 sends it to the viewing information collecting server 200 via the IP network 600 (step ST7). After that, the flow returns to the processing at step ST5 to repeat the foregoing processing.

On the other hand, when the state change request is input (YES at step ST5), the IPTV broadcast receiving unit 301 further decides on whether the state change request is a channel change or not (step ST8). When the state change request is the channel change (YES at step ST8), the IPTV broadcast receiving unit 301 executes the channel change processing (step ST9), and proceeds to the processing at the foregoing step ST6.

Furthermore, unless the state change request is the channel change (NO at step ST8), the IPTV broadcast receiving unit 301 decides on whether the state change request is power off or not (step ST10). Unless the state change request is power off (NO at step ST10), the IPTV broadcast receiving unit 301 carries out processing other than the channel change (step ST11), and proceeds to the processing at the foregoing step ST6. On the other hand, when the state change request is power off (YES at step ST10), the IPTV broadcast receiving unit 301 executes the channel change processing (step ST12), followed by the end processing and power off processing (step ST13), and terminates the processing.

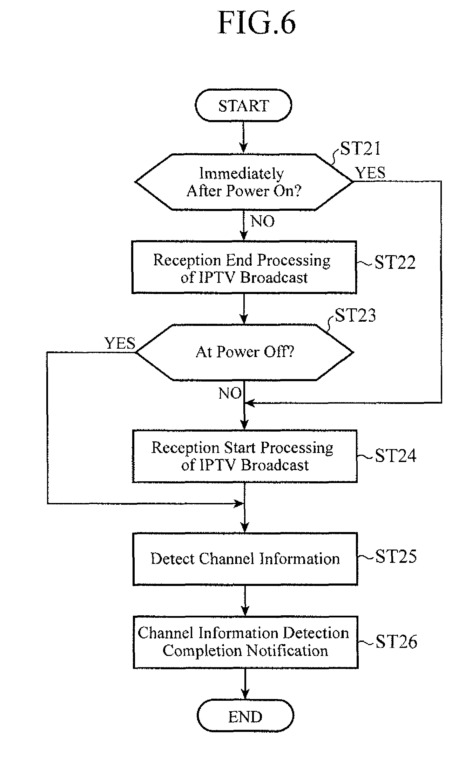

Next, referring to the flowchart of FIG. 6, details of the foregoing channel change processing (at step ST4, ST9 or ST12 of FIG. 5) will be described.

First, the IPTV broadcast receiving unit 301 decides on whether the channel change processing occurs immediately after power on or not (step ST21). In other words, it decides on whether the channel change processing is that of step ST4 shown in the flowchart of FIG. 5.

Unless it is the channel change processing immediately after the power on (NO at step ST21), the IPTV broadcast receiving unit 301 executes the reception end processing of the IPTV broadcast on the channel before the channel change (step ST22). Furthermore, unless it is the channel change processing at the power off (NO at step ST23), the IPTV broadcast receiving unit 301 executes the reception start processing of the IPTV broadcast on the channel after the channel change (step ST24). After that, the IPTV broadcast receiving unit 301 sends the channel information detecting request to the channel information detecting unit 302, and the channel information detecting unit 302 detects the channel information (step ST25). At the channel information detecting processing at step ST25, the IPTV broadcast receiving unit 301 detects the channel ID, start event, start time, end event and end time of the channel to be subjected to the channel change shown in FIG. 3, and stores them. After the detecting processing of the channel information completes, the channel information detecting unit 302 sends a notification thereof to the IPTV broadcast receiving unit 301 (step ST26), and terminates the processing.

On the other hand, in the case of the channel change processing immediately after the power on (YES at step ST21), the IPTV broadcast receiving unit 301 skips the processing at step ST22, and proceeds to the processing at step ST24. This is because the IPTV broadcast is not yet received immediately after the power on, and hence it is not necessary to execute the reception end processing of the IPTV broadcast.

On the other hand, in the case of the channel change processing at the power off (YES at step ST23), the IPTV broadcast receiving unit 301 skips the processing at step ST24, and proceeds to the processing at step ST25. This is because it is not necessary at the power off to execute the reception start processing of the IPTV broadcast after the reception end of the IPTV broadcast.

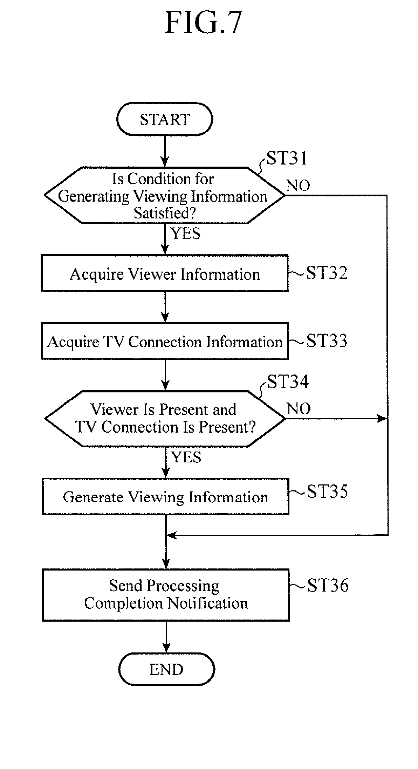

Next, referring to the flowchart of FIG. 7, details of the foregoing viewing information generating processing (step ST6 in FIG. 5) will be described.

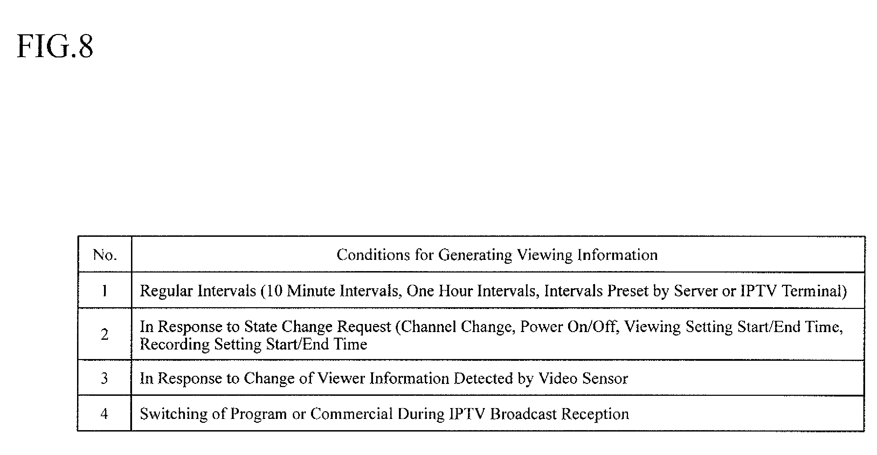

First, receiving the viewing information generation request from the IPTV broadcast receiving unit 301, the viewing information generation unit 305 decides on whether it satisfies a viewing information generating condition or not (step ST31). FIG. 8 shows an example of viewing information generating conditions used for the decision processing at step ST31. FIG. 8 shows four conditions from No. 1 to No. 4, and the viewing information generation unit 305 forms the viewing information when the request satisfies one of the four conditions. Incidentally, the viewing information generating conditions are not limited to the items shown in FIG. 8.

When the viewing information generating condition is satisfied (YES at step ST31), the viewing information generation unit 305 acquires the viewer information from the viewer information acquiring unit 303 (step ST32). Furthermore, the viewing information generation unit 305 acquires the TV connection information the TV connection detecting unit 304 detects (step ST33). Referring to the viewer information acquired at step ST32 and the TV connection information acquired at step ST33, the viewing information generation unit 305 decides on whether a viewer is present in front of the TV 500 and whether the IPTV terminal 300 is connected to the TV 500 (step ST34). When the viewer is present in front of the TV 500 and when the IPTV terminal 300 is connected to the TV 500 (YES at step ST34), the viewing information generation unit 305 forms the viewing information not only from the viewing information and TV connection information, but also from the channel information the channel information detecting unit 302 detects (step ST35), sends the processing completion notification of the viewing information generation to the IPTV broadcast receiving unit 301 (step ST36), and terminates the processing.

On the other hand, unless the request satisfies the viewing information generating condition (NO at step ST31), or unless the viewer is present in front of the TV 500 or unless the IPTV terminal 300 is connected to the TV 500 (NO at step ST34), the viewing information generation unit 305 sends a processing completion notification to the IPTV broadcast receiving unit 301 (step ST36), and terminates the processing.

A concrete example of the viewing information generating processing shown in the flowchart of FIG. 7 will be described by way of example of the viewer information of FIG. 2 and the TV connection information of FIG. 4.

The viewer information of FIG. 2 shows that a viewer was present in front of the TV from 10:00:00 to 14:00:00 and from 17:00:00 to 21:00:00 on March 31, 2011, and the TV connection information of FIG. 4 shows that the TV connection was established from 10:00:00 to 13:30:00 and from 17:30:00 forward on March 31, 2011. Accordingly, the time when the viewer is present in front of the TV 500 and when the TV connection is established is from 10:00:00 to 13:30:00 and from 17:30:00 to 21:00:00 on March 31, 2011. Thus, although the viewing information generation unit 305 forms the viewing information during the time periods that satisfy the conditions, it does not form the viewing information during the time periods other than those.

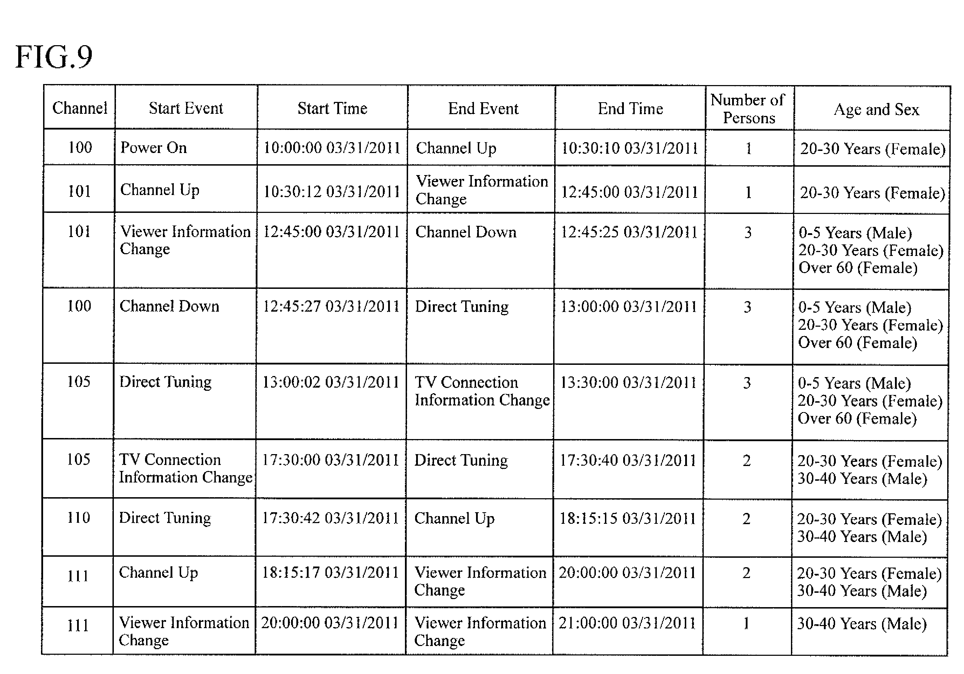

Furthermore, FIG. 9 shows a result of forming the viewing information from the channel information shown in FIG. 3 by the viewing information generation unit 305. As for the viewing information of FIG. 9, the viewing information generation unit 305 forms the viewing information excluding the channel information during the time period from 13:30:00 to 17:30:00 on March 31, 2011 while the TV connection was not established and during the time after 21:00:00 while the viewer is not present in front of the TV 500.

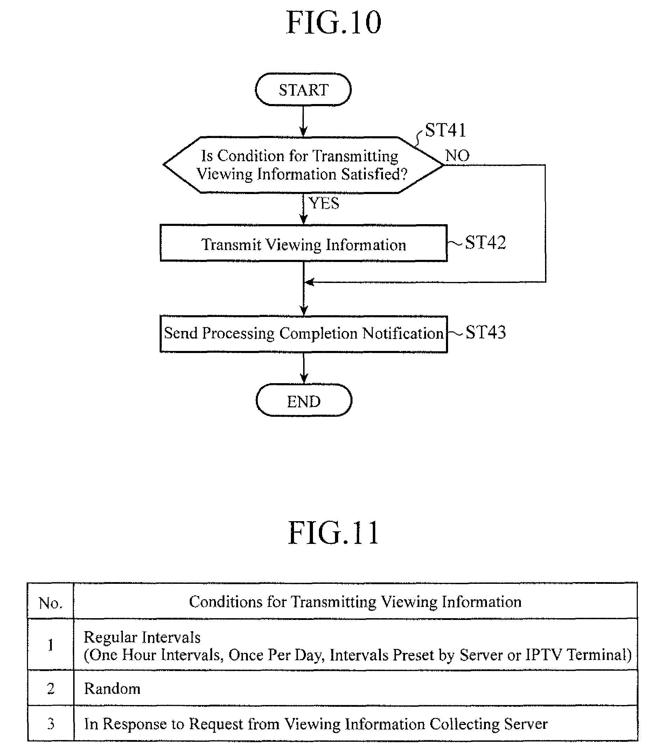

Next, referring to the flowchart of FIG. 10, details of the viewing information transmitting processing described above (step ST7 in FIG. 5) will be described.

Receiving a viewing information transmitting request notification from the IPTV broadcast receiving unit 301, the viewing information transmitting unit 306 decides on whether it satisfies a condition for transmitting the viewing information or not (step ST41). An example of the viewing information transmitting conditions used for the decision processing at step ST41 is shown in FIG. 11, which shows three conditions of regular intervals, at random and in response to a request from the viewing information collecting server 200. If one of the three conditions is satisfied, the viewing information transmitting unit 306 transmits the viewing information. Incidentally, the viewing information transmitting conditions are not limited to the items shown in FIG. 11.

In the case of satisfying the viewing information transmitting condition (YES at step ST41), the viewing information transmitting unit 306 acquires the viewing information formed by the viewing information generation unit 305, places it into an IP packet, and transmits the viewing information to the viewing information collecting server 200 via the IP network 600 (step ST42). After that, it sends a processing completion notification to the IPTV broadcast receiving unit 301 (step ST43), and terminates the processing.

As described above, according to the present embodiment 1, it is configured in such a manner as to comprise the viewing information generation unit 305 for forming the viewing information only when a viewer is present in front of the TV 500 and the IPTV terminal 300 is connected to the TV 500 in accordance with the recognition result of the viewer sitting in front of the TV by the viewer recognition device 400 and the detection result on whether the IPTV terminal 300 is connected to the TV 500 by the TV connection detecting unit 304; and the viewing information transmitting unit 306 for transmitting the viewing information formed to the viewing information collecting server 200. Accordingly, the present embodiment can correctly decide on whether the viewer is actually viewing the program the IPTV terminal is receiving, and collect the accurate viewing information.

Incidentally, although the foregoing embodiment 1 shows the IPTV terminal 300 as a device different from the TV 500, a configuration is also possible in which the IPTV terminal 300 is incorporated into the TV 500. In addition, as for the apparatus to which the IPTV terminal 300 supplies the video and audio, it is not limited to the TV 500, but a video/audio storage device such as a DVD recorder and Blu-ray recorder, or other video/audio output devices can also be used.

In addition, as for the method of detecting the presence or absence of the connection between the IPTV terminal 300 and the TV 500, the foregoing embodiment 1 can detect, in addition to the presence or absence of the connection with the TV 500, on whether the connected apparatus has a function of presenting the video and audio the IPTV terminal 300 outputs and can add the presenting function as a condition for detecting the connection with the TV 500 by using the DDC (Display Data Channel) signal of the HDMI, and by acquiring information characteristic to the apparatus (vendor name, model number, allowable resolution, etc.), which is referred to as EDID (Extended Display Identification Data) from the TV 500 by the IPTV terminal 300. Furthermore, the completion of the HDCP (High-bandwidth Digital Content Protection) authorization by the HDMI can be employed as a condition for detecting the presence of the connection with the TV 500.

In addition, although the foregoing embodiment 1 shows the configuration that uses the video sensor 401 to detect a viewer in front of the TV 500, a configuration is also possible which employs other means for detecting a viewer in front of the TV. For example, a detecting device such as an infrared sensor which detects only the presence or absence of a person can also be used.

In addition, although the foregoing embodiment 1 shows the viewer recognition device 400 and the IPTV terminal 300 as different devices, they are not limited to that. For example, the viewer recognition device 400 can be incorporated into the IPTV terminal 300 or into the TV 500. When the viewer recognition device 400 is incorporated into the TV 500, the viewer information acquiring unit 303 in the IPTV terminal 300 acquires the viewer information from the TV 500.

In addition, although the foregoing embodiment 1 shows a configuration in which the video sensor 401 is incorporated in the viewer recognition device 400, a configuration is also possible which separates the video sensor 401 from the viewer recognition device 400, and incorporates the viewer recognition device 400 in the IPTV terminal 300. In this case, the video sensor 401 provided outside transmits the video taken with a camera or the data a sensor acquires to a viewer recognizing unit incorporated in the IPTV terminal 300 so that the viewer recognizing unit can analyze the video and generate the viewer information.

In addition, although the foregoing embodiment 1 shows a configuration that comprises the IPTV broadcast distribution server 100 and the viewing information collecting server 200 separately, a configuration is also possible which employs the same server. In addition, as for the viewing information collecting server 200 , it can be a server installed in a third-party organization different from the service provider.

### EMBODIMENT 2

Although the foregoing embodiment 1 shows a configuration for collecting the viewing program when the viewer is actually viewing an IPTV broadcast, the present embodiment 2 shows a configuration in which the IPTV terminal 300 has a function of recording an IPTV broadcast in a storage medium such as an HDD, and collects the viewing information when the viewer records an IPTV broadcast and when he or she plays back a recorded content.

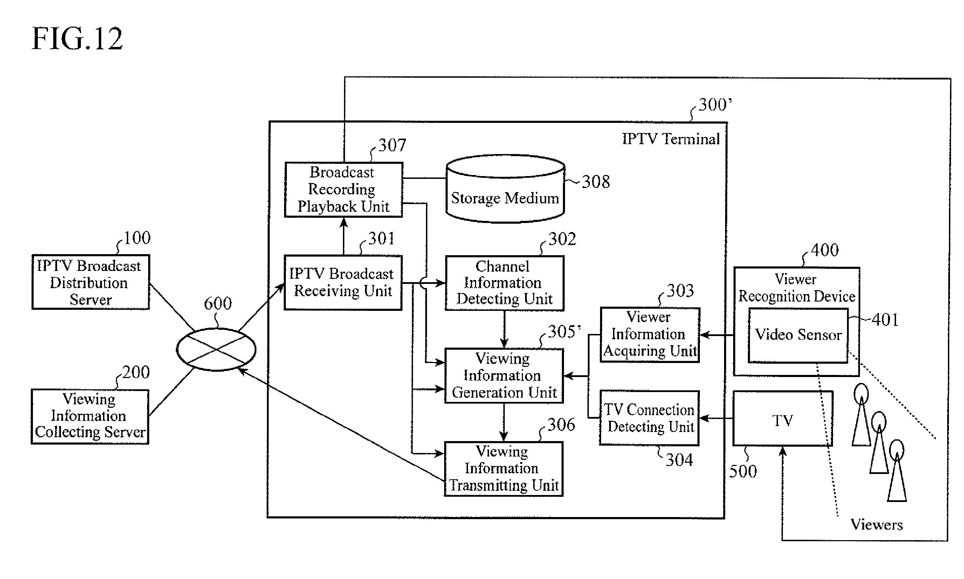

FIG. 12 is a block diagram showing a configuration of a viewing information collecting system of the embodiment 2 in accordance with the present invention. The viewing information collecting system comprises the IPTV broadcast distribution server 100, the viewing information collecting server 200, an IPTV terminal 300', the viewer recognition device 400, the TV 500 and the IP network 600. The IPTV terminal 300' comprises a broadcast recording playback unit 307 and a storage medium 308 in addition to the components of the IPTV terminal 300 of the embodiment 1. In addition, the viewing information generation unit 305' generates the viewing information not only from the channel information but also from the information stored in the storage medium 308. Incidentally, as for the same or like components to those of the viewing information collecting system of the embodiment 1, they are designated by the same reference numerals as those used in the embodiment 1, and their description will be omitted or simplified.

The broadcast recording playback unit 307 has a function of recording an IPTV broadcast the IPTV broadcast receiving unit 301 receives in the storage medium 308 such as an HDD, and further has a function of playing back an IPTV broadcast recorded in the storage medium 308 (referred to as "recorded content" from now on).

As for the storage medium 308, a configuration is possible which incorporates it in the IPTV terminal 300' as shown in FIG. 12, or a configuration is also possible which has the storage medium 308 in equipment other than the IPTV terminal 300', and connects the equipment to the IPTV terminal 300' through a USB cable or IP network.

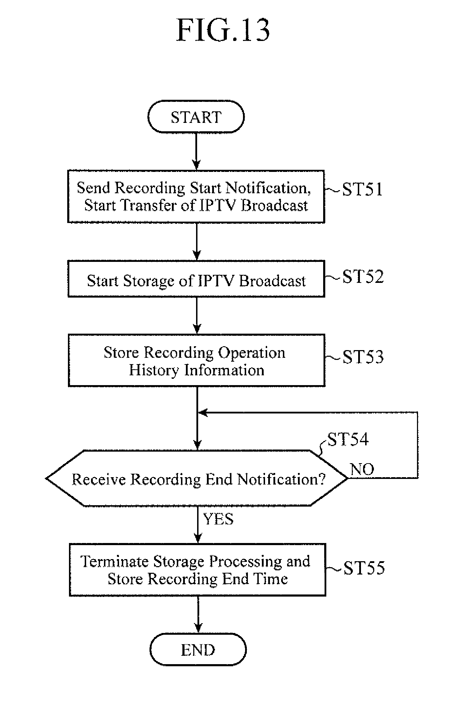

Next, the operation of the broadcast recording playback unit of the information collecting system of the embodiment 2 will be described. The operation of the broadcast recording playback unit will be described separately in terms of the operation at a start of recording and the operation at playback of a recorded content. First, referring to the flowchart of FIG. 13, the operation at a recording start will be described.

When a viewer carries out a recording start operation using a remote control or when the recording start time a viewer sets comes, the IPTV broadcast receiving unit 301 notifies the broadcast recording playback unit 307 of the recording start, and starts transfer of the IPTV broadcast received (step ST51). Receiving the recording start notification from the IPTV broadcast receiving unit 301, the broadcast recording playback unit 307 starts to store the IPTV broadcast transferred into the storage medium 308 (step ST52), and further stores recording operation history information such as a channel ID, broadcast date and time, recorded content ID, operation type, operation start date and time in the storage medium 308 at the recording start time (step ST53).

After that, the broadcast recording playback unit 307 decides on whether it receives a transfer end notification of the IPTV broadcast from the IPTV broadcast receiving unit 301 or not (step ST54), and when it receives the transfer end notification of the IPTV broadcast (YES at step ST54), it terminates the storage processing into the storage medium 308, places the recording end time into the recording operation history information (step ST55), and terminates the processing. On the otherhand, if it has not yet received the transfer end notification of the IPTV broadcast (NO at step ST55), it repeats the decision processing at step ST54 until the transfer terminates.

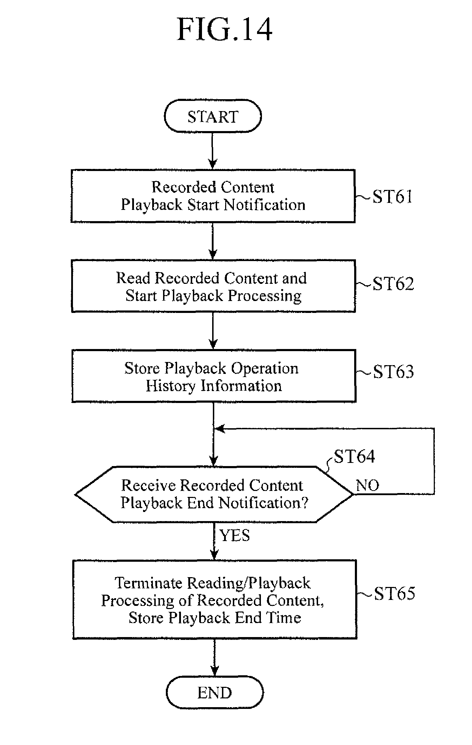

Next, referring to the flowchart of FIG. 14, the recorded content playback operation will be described.

When the viewer carries out a recorded content playback start operation using the remote control or the like, the IPTV broadcast receiving unit 301 sends a recorded content playback start notification to the broadcast recording playback unit 307 of (step ST61). Receiving the recorded content playback start notification from the IPTV broadcast receiving unit 301, the broadcast recording playback unit 307 reads the recorded content from the storage medium 308, starts playback processing (step ST62), and further stores the playback operation history information such as the channel ID, broadcast date and time, recorded content ID, operation type, operation start date and time into the storage medium 308 at the playback start time (step ST63).

After that, the broadcast recording playback unit 307 decides on whether it receives the recorded content playback end notification from the IPTV broadcast receiving unit 301 or not (step ST64). When it receives the recorded content playback end notification (YES at step ST64), it terminates its read processing and playback processing of the recorded content from the storage medium 308, sets the operation end time into the playback operation history information (step ST65), and terminates the processing. On the other hand, if it does not yet received the recorded content playback end notification (NO at step ST64), it repeats the decision processing at step ST64 until it receives the recorded content playback end notification.

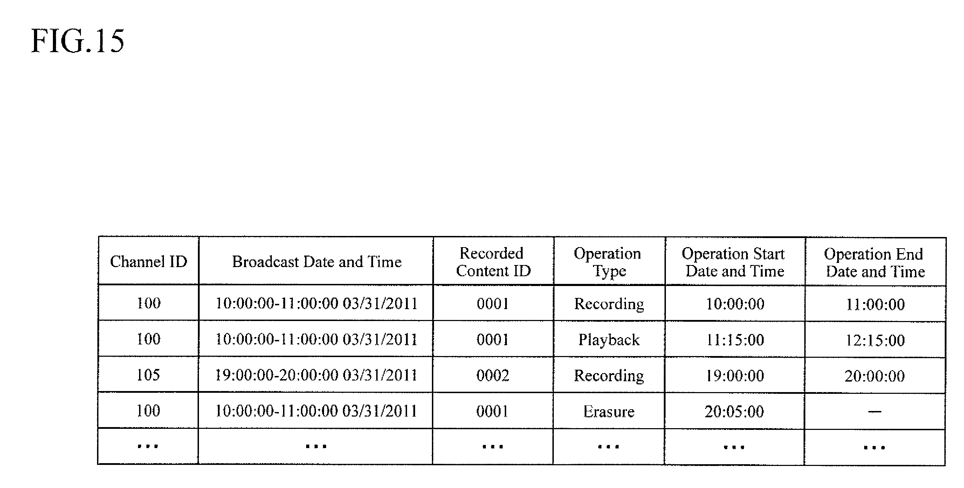

FIG. 15 shows an example of the operation history information the broadcast recording playback unit 307 stores. In FIG. 15, the channel ID, broadcast date and time, recorded content ID assigned at the recording time, operation type (recording/playback/erasure), operation start date and time, and operation end date and time are shown as the operation history. This enables acquiring recording information about the content and playback information about the recorded content.

Incidentally, items of the operation history information shown in FIG. 13 are only an example, and other items such as fast-forward, rewind, and pause of the recorded content can be added as the operation type, or some items can be removed.

The viewing information generation unit 305' forms the viewing information from the channel information the channel information detecting unit 302 detects at generating the viewing information, and from the operation history information the broadcast recording playback unit 307 stores in the storage medium 308.

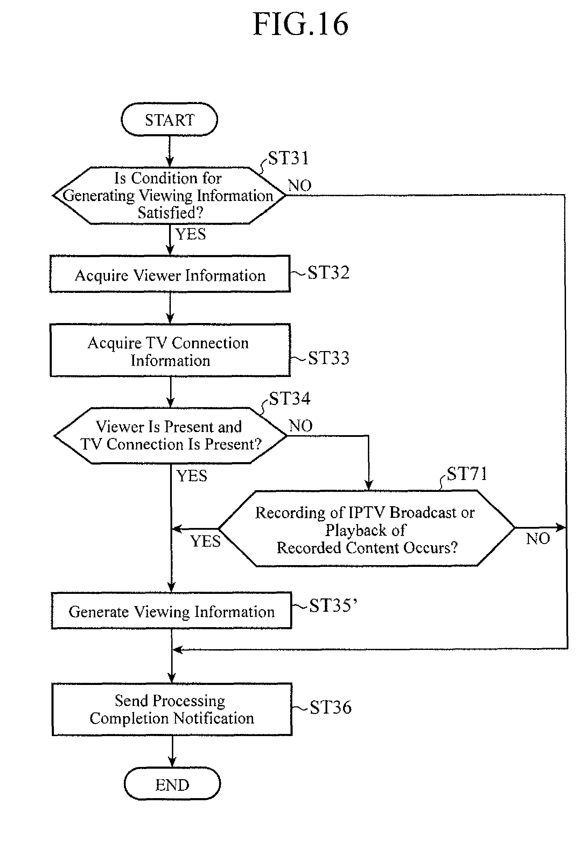

FIG. 16 is a flowchart showing the operation of the viewing information generation unit of the viewing information collecting system of the embodiment 2. Incidentally, in the following description, the same steps as those of the viewing information generation unit of the viewing information collecting system of the embodiment 1 are designated by the same reference symbols as those of FIG. 7, and their description will be omitted or simplified.

The viewing information generation unit 305' decides on whether a viewer is present in front of the TV 500 and the IPTV terminal 300' is connected to the TV 500 or not by referring to the viewer information it acquires at step ST32 and the TV connection information it acquires at step ST33 (step ST34). When the viewer is present in front of the TV 500 and the IPTV terminal 300' is connected to the TV 500 (YES at step ST34), it proceeds to the processing at step ST35'. On the other hand, when the viewer is not present in front of the TV 500 or when the IPTV terminal 300' is not connected to the TV 500 (NO at step ST34), the viewing information generation unit 305' further decides on whether the recording of an IPTV broadcast or the playback of a recorded content is being performed by referring to the operation history information (step ST71). When the recording of the IPTV broadcast or the playback of the recorded content is being carried out (YES at step ST71), the viewing information generation unit 305' proceeds to the processing at step ST35'.

At step ST35' , the viewing information generation unit 305' forms the viewing information not only from the viewing information and TV connection information, or the operation history information, but also from the channel information the channel information detecting unit 302 detects. After that, it sends a viewing information generation processing completion notification to the IPTV broadcast receivingunit 301 (step ST36), and terminates the processing. On the other hand, unless the recording of the IPTV broadcast or playback of the recorded content is carried out (NO at step ST71), the viewing information generation unit 305' proceeds to the processing at step ST36. On the other hand, unless the viewing information generating condition is satisfied (NO at step ST31), or unless the viewer is present in front of the TV 500 or unless the TV connection is detected (NO step ST34), the viewing information generation unit 305' sends the processing completion notification to the IPTV broadcast receiving unit 301 (step ST36), and terminates the processing.

According to the foregoing operation, even if the viewer is not present in front of the TV 500 or the IPTV terminal is not connected to the TV 500, the viewing information generation unit 305' can form the viewing information when the IPTV broadcast is recorded or the recorded content is played back.

The viewing information transmitting unit 306 transmits the viewing information the viewing information generation unit 305' forms to the viewing information collecting server 200 in accordance with the viewing information transmitting condition in the same manner as in the embodiment 1.

As described above, according to the present embodiment 2 , it is configured in such a manner that it comprises the broadcast recording playback unit 307 for recording the received IPTV broadcast in the storage medium 308, for playing back the content recorded in the storage medium 308, and for generating the operation history information, and that the viewing information generation unit 3 05' forms the viewing information from the viewer information, TV connection information, operation history information and channel information. Accordingly, even if the viewer is not sitting in front of the TV 500 when recording the IPTV broadcast, or even if the TV 500 selects the equipment other than the IPTV terminal 300 during recording, the present embodiment 2 can form the viewing information from the information about the IPTV broadcast recording and about the playback of the recorded IPTV broadcast, thereby being able to collect more accurate viewing information.

Incidentally, the foregoing embodiment 2 has three types of viewing information for the viewing, recording and playback modes as its attributes, and there are some cases where a plurality of viewing information items such as about the viewing and recording or about the viewing and recording and playback are generated for the same program. In such a case, as for the program whose viewing information has already been transmitted to the viewing information collecting server 200 in one of the viewing, recording and playback modes, it is possible to prevent generating the viewing information again in the recording or playback mode. This makes it possible to prevent the viewing information from being collected a plurality of times for the same program, and to suppress the occurrence of useless network traffic.

Incidentally, although the foregoing embodiment 1 and embodiment 2 show a configuration that transmits the viewing information the viewing information generation unit 305 or 305' forms to the viewing information collecting server 200 via the viewing information transmitting unit 302 and IP network 600, a configuration is also possible which stores the viewing information generated in a storage medium (not shown) in the IPTV terminal 300, and provides the stored viewing information in response to a user request.

Incidentally, it is to be understood that a free combination of the individual embodiments, variations of any components of the individual embodiments or removal of any components of the individual embodiments are possible within the scope of the present invention.

### INDUSTRIAL APPLICABILITY

A viewing information collecting system, broadcast receiving apparatus, and viewing information collecting method in accordance with the present invention comprise the viewing information generation unit for forming the viewing information only when it is decided that a viewer is sitting in front of the TV and that the IPTV terminal is connected to the TV in accordance with the recognition result about the viewer in front of the TV by the viewer recognition device and in accordance with the detection result of the TV connection detecting unit on whether the IPTV terminal is connected to the TV or not; and the viewing information transmitting unit for transmitting the viewing information generated to the viewing information transmitting server, and can decide correctly whether the viewer is actually viewing the program the IPTV terminal is receiving. Accordingly, it is suitable foranapplication to the video content (program) distribution service such as a broadcast.

### DESCRIPTION OF REFERENCE SYMBOLS

100 IPTV broadcast distribution server; 200 viewing information collecting server; 300 IPTV terminal; 301 IPTV broadcast receiving unit; 302 channel information detecting unit; 303 viewer information acquiring unit; 304 TV connection detecting unit; 305, 305' viewing information generation unit; 306 viewing information transmitting unit; 307 broadcast recording playback unit; 308 storage medium; 400 viewer recognition device; 401 video sensor; 500 TV; 600 IP network.

## Claims

1. A viewing information collecting system including a broadcast distribution server for distributing an IPTV broadcast, a broadcast receiving apparatus for receiving an IPTV broadcast distributed by the broadcast distribution server, a display device for outputting video and audio of the IPTV broadcast the broadcast receiving apparatus receives, and a viewing information collecting server for collecting viewing information from the broadcast receiving apparatus, wherein the broadcast receiving apparatus comprises:
a viewer information acquiring unit for acquiring viewer information which is information about a viewer who is watching the video and audio output from the display device;
a channel information detecting unit for detecting channel information about an IPTV broadcast distributed by the broadcast distribution server;
a connection detecting unit for detecting connection between the broadcast receiving apparatus and the display device, and for generating connection information;
a viewing information generation unit for generating, by referring to the viewer information the viewer information acquiring unit acquires and to the connection information the connection detecting unit generates, the viewing information from the channel information the channel information detecting unit detects when the viewer who is watching the video and audio output from the display device is present and when the broadcast receiving apparatus is connected to the display device; and
a viewing information transmitting unit for transmitting the viewing information the viewing information generation unit generates to the viewing information collecting server.

2. The viewing information collecting system according to claim 1, wherein
the broadcast receiving apparatus comprises a broadcast recording playback unit for recording the received IPTV broadcast in a storage medium, and for playing back the IPTV broadcast recorded in the storage medium; and wherein
the viewing information generation unit generates the viewing information when a viewer who watches the video and audio output from the display device is not present, or when the broadcast receiving apparatus is not connected to the display device and when the broadcast recording playback unit records the IPTV broadcast or plays back the IPTV broadcast recorded.

3. The viewing information collecting system according to claim 2, wherein
the recording playback unit generates operation history information that retains a recording operation history when recording the IPTV broadcast and that retains a playback operation history when playing back the IPTV broadcast; and
the viewing information generation unit generates the viewing information when a viewer who watches the video and audio output from the display device is not present or when the broadcast receiving apparatus is not connected to the display device, and when the operation history information the recording playback unit generates retains the recording operation history or the playback operation history.

4. The viewing information collecting system according to claim 1, further comprising:
a viewer recognition device that has a camera for taking a picture of a viewer who is watching the video and audio output from the display device, recognizes the viewer from image data of the camera, and generates the viewer information, wherein
the viewer information acquiring unit acquires the viewer information the viewer recognition device generates.

5. The viewing information collecting system according to claim 4, wherein the viewer recognition device is installed in the broadcast receiving apparatus or in the display device.

6. The viewing information collecting system according to claim 1, wherein
the broadcast receiving apparatus and the display device are connected through an HDMI (High Definition Multimedia Interface); and
the connection detecting unit of the broadcast receiving apparatus generates the connection information by detecting connection with the display device by detecting a hot plug signal output from the display device.

7. The viewing information collecting system according to claim 1, wherein
the broadcast receiving apparatus and the display device are connected through an HDMI (High Definition Multimedia Interface); and
the connection detecting unit of the broadcast receiving apparatus receives EDID (Extended Display Identification Data) output from the display device, and generates the connection information by detecting connection between the broadcast receiving apparatus and the display device when the connection detecting unit decides by referring to the EDID received that the display device has a prescribed video and audio output function.

8. A broadcast receiving apparatus that receives an IPTV broadcast distributed, and outputs video and audio of the IPTV broadcast received, the broadcast receiving apparatus comprising:
a viewer information acquiring unit for acquiring viewer information which is information about a viewer who is watching the video and audio output;
a channel information detecting unit for detecting channel information about the IPTV broadcast distributed;
a connection detecting unit for detecting connection with an output destination of the video and audio, and for generating connection information;
a viewing information generation unit for generating, by referring to the viewer information the viewer information acquiring unit acquires and to the connection information the connection detecting unit generates, the viewing information from the channel information the channel information detecting unit detects when the viewer who is watching the video and audio output is present and when the connection with the output destination of the video and audio is established; and
a viewing information transmitting unit for outputting the viewing information the viewing information generation unit generates.

9. The broadcast receiving apparatus according to claim 8, wherein
the broadcast receiving apparatus comprises a broadcast recording playback unit for recording the received IPTV broadcast in a storage medium, and for playing back the IPTV broadcast recorded in the storage medium; and wherein
the viewing information generation unit generates the viewing information when a viewer who watches the video and audio output is not present or when the connection with the output destination of the video and audio is established, and when the broadcast recording playback unit records the IPTV broadcast or plays back the IPTV broadcast recorded.

10. The broadcast receiving apparatus according to claim 8, further comprising:
a viewer recognition unit that has a camera for taking a picture of a viewer who is watching the video and audio output, recognizes the viewer from image data of the camera, and generates the recognition information, wherein
the viewer information acquiring unit acquires the viewer information the viewer recognition unit generates.

11. A viewing information collecting method of receiving by a broadcast receiving apparatus an IPTV broadcast distributed by a broadcast distribution server, of outputting on a display device video and audio of the IPTV broadcast received, and of collecting by a viewing information collecting server viewing information from the broadcast receiving apparatus, the viewing information collecting method comprising:
a step of acquiring, by a viewer information acquiring unit of the broadcast receiving apparatus, viewer information which is information about a viewer who is watching the video and audio output from the display device;
a step of detecting, by a channel information detecting unit, channel information about an IPTV broadcast distributed;
a step of detecting, by a connection detecting unit, connection between the broadcast receiving apparatus and the display device, and of generating connection information;
a step of generating, by a viewing information generation unit, the viewing information from the channel information, when the viewer who is watching the video and audio output from the display device is present and when the broadcast receiving apparatus is connected to the display device, by referring to the viewer information and to the connection information; and
a step of transmitting, by a viewing information transmitting unit, the viewing information to the viewing information collecting server.
